# EUROPEAN PATENT APPLICATION

(11) **EP 4 349 179 A1**
(43) Date of publication of application: **10.04.2024**
(21) Application number: 22000226.5
(22) Date of filing: 07.10.2022
(51) Int. Cl.: A23C 19/097, A23C 19/14, A23C 19/068

(54) **STERILIZATION OF LARVAE INFESTED CHEESE BY EXPOSURE TO EXTREME TEMPERATURES**

(71) Applicant: Garvin, Alex M., 68350 Brunstatt (FR)
(72) Inventor: Garvin, Alex M., 68350 Brunstatt (FR)

(57) **Abstract**

The present invention provides methods for the treatment of larvae infested cheese in order to kill said larvae and other pathogens thus rendering the cheese safe for human consumption.

This inventive method has utility in the food science field.

## Description

### BACKGROUND

Casu marzu is a type of cheese made in Sardinia, Italy from sheep's milk where the cheese is exposed to Piophila casei flies that lay their eggs on the cheese (ref Manca). The eggs hatch into larvae that grow in the cheese and metabolize it to produce complex flavors, resulting in a food product considered a delicacy by the local population with annual production estimated to be 100 tons. Production would be much higher if it were not for the fact that in 1962 the Italian government banned casu marzu due to health concerns, article 5, law 283/196. This was followed by EU regulations 852, 853, 854 and 882 of 2004 and regulation 2073 of 2005 that also outlaw this product. Casu marzu poses a health risk due to the consumption of live larvae, which can grow in the stomach and intestine of the consumer and cause myiasis, a parasitic infestation of fly larvae (ref Peckenschneider). There is also the risk that pathogenic microbes and viruses introduced by the flies will grow in the cheese and pose a risk.

In order to make casu marzu safe and legal, the larvae and microbes (including viruses) must be killed in such a way that the mortality rate is 100%. The treatment used to kill the pathogens may result in changes to the texture, nutritional value, and taste of the cheese, but these changes can be kept minimal so that consumers remain interested in the product while at the same time permitting its approval by health authorities. Lastly, the killing process should be fast, safe, inexpensive, easily performed, and acceptable to both the health authorities and consumers.

It should be noted that the European Food Safety Authority (EFSA) has authorized three insect species for human consumption; yellow mealworms, crickets, and grasshoppers. The insects are sold in frozen, dried, or powdered form, treatments that insure an insect mortality rate of 100%. The yellow mealworms currently approved for human consumption are the larval form of the yellow mealworm beetle Tenebrio molitor. Preparation of the mealworms involves freezing at -18°C and treatment with boiling in water for at least 2 minutes to expose the sample to temperatures >90°C(ref Turck D) which ensures complete killing of all larvae and microbes. Tenebrio molitor larvae are known to contain both bacteria and viruses, and yet the authorities consider such larvae safe for human consumption because heat treatment kills all such pathogens, in addition to the larvae themselves.

It is anticipated that treating casu marzu in this way will kill all potential pathogens, including the Piophila casei larvae, producing what will be essentially be a cream cheese made from casu marzu that is safe for human consumption. It is well established that all major food pathogens that cause human disease, including E coli, Salmonella, Listeria, Norovirus, Clostridium perfringens, Campylobacter, and Staphylococcus aureus are killed with 100% efficiency at 70°C, therefore treatment at greater than 90°C will insure complete killing.

Biogenic amines such as putrescine and cadaverine are produced during the ripening of casu marzu and contribute to its unique taste. These biogenic amines are heat-stable at 100°C. For example, the boiling point of putrescine is 158.5°C and the boiling point of cadaverine is 179.1°C. The temperature at which these biogenic amines thermally decompose is by definition higher than the boiling point, therefore these molecules are stable well above 100°C.

The significant difference between the temperature at which all pathogens are killed (70°C) and the boiling point of the biogenic amines that give casu marzu its desired taste (158.5°C and 179.1°C) form the basis for killing all pathogens without altering the levels of these biogenic amines, thus leaving the taste of heat-treated casu marzu intact. The potentially pathogenic casu marzu need only be subjected to a temperature between the killing point for the pathogens and the boiling point of the biogenic amines.

### SUMMARY OF THE INVENTION

Sterilization by heat treatment is a well-established method to make food safe for human consumption and each year over one billion tons of food are heat sterilized worldwide. Casu marzu has never been treated this way because the natives of Sardinia who consume this cheese do not consider it dangerous, so there was never a motivation to heat treat casu marzu. Furthermore, there is the perceived risk that such treatment will alter the taste of the cheese making it undesirable for consumers.

A previous attempt to legalize casu marzu involved ripening the cheese in controlled conditions where the flies and cheese were kept in a conditioned storeroom to insure that the flies did not introduce potentially harmful microbes, such as E coli, into the cheese (ref Mazzette). However, no attempt was made to kill the fly larvae and other pathogens, and the request to legalize the cheese made in this way was rejected by the European Food Safety Authority. In this effort to legalize casu marzu, it was assumed that live larvae in casu marzu did not pose a health risk, while randomly introduced microbes did, therefore there was no motivation to kill the larvae by temperature treatment once the microbial floral was defined and considered safe..

During the infestation process, the cheese is altered by the metabolic activity of the larvae and microbes present in the cheese. This metabolic activity produces levels of the biogenic amines putrescine and cadaverine not found in non-infested cheese (ref Manca). Optimal levels of biogenic amines can be obtained by heating the cheese when optimal levels are present. Heating to >90°C will block further metabolic activity and arrest the production of additional biogenic amines by denaturing the enzymes involved in biogenic amine production. Therefore, casu marzu ripened for 60 days or less followed by heat treatment will have biogenic amine levels lower than cheese ripened for 90 or 120 days. Heat treatment will also block the production of histamine, a biogenic amine that in high doses can cause health problems in histamine sensitive consumers.

The unique flavor of casu marzu is due in part to cadaverine and putrescine. These compounds are also present in many other food products, such as Roquefort and Gouda cheeses, wines, sausages, and soy sauce (ref Stratton). A key realization in the present invention is that these biogenic amines that give casu marzu its unique taste are heat stable and are not destroyed by treatment at >90°C, while such treatment will destroy all pathogens, including live larvae. The personal experience of the inventor and of Sardinians that make and consume casu marzu every year have determined that the taste of heat treated casu marzu remains essentially the same compared to untreated casu marzu. The texture is altered, but many consumers will not be deterred by this as long as the taste is intact. Lastly, the nutritional value of heat treated cheese remains constant since the main components of cheese (proteins, fats, carbohydrates, water, and minerals) are heat stable at >90°C.

### Detailed Description of a Preferred Embodiment

On September 28^{th}, 2022 ten 150 gram portions of casu marzu produced for personal consumption at the Azienda Sa Mandra Farm in Alghero, Sardinia, that had been ripened for 90 days by exposing sheep cheese to Piophila flies were placed in 200 ml Le Parfait glass jars, sealed, and frozen at -20°C for 6 hours. The jars were then placed in a Rational steam cooker (Rational, AG Germany) for 60 minutes at 100°C to insure the casu marzu reached temperatures in excess of 90°C in order to kill all organisms in the sample and to denature all enzymes capable of catalyzing metabolic reactions, essentially rendering the sample biologically inert.

On September 29, 2022, fresh untreated casu marzu ripened 90 days was taste compared with the heat-treated cheese. The inventor and six Sardinian individuals who have experience making and eating casu marzu tasted these samples. The tasters were instructed to note the taste of the two samples and to compare. The heat-treated casu marzu was deemed to have essentially the same taste at the untreated casu marzu by all seven tasters.

### References

Manca, G., Porcu, A., Ru, A., Salaris, M., Franco, M. A., & de Santis, E. P. L. (2015). Comparison of γ-aminobutyric acid and biogenic amine content of different types of ewe's milk cheese produced in Sardinia, Italy. Italian Journal of Food Safety, 4(2). https://doi.org/10.4081/ijfs.2015.4700
Peckenschneider, L. E., Pokorny, C., & Hellwig, C. A. (1952). Intestinal infestation with maggots of the "cheese fly" (Piophila casei). Journal of the American Medical Association, 149(3). https://doi.org/10.1001/jama.1952.72930200005011b
Stratton, J. E., Hutkins, R. W., & Taylor, S. L. (1991). Biogenic amines in cheese and other fermented foods: A review. In Journal of Food Protection (Vol. 54, Issue 6). https://doi.org/10.4315/0362-028X-54.6.460
Mazzette, R., Colleo, M. M., Riu, G., Piras, G., Piras, F., Addis, M., Pes, M., Pirisi, A., Meloni, D., Mureddu, A., Spada, S., Fiori, M., Coinu, M., & Lentini, A. (2010). Production under controlled conditions of "casu marzu" cheese: effect of the Piophila casei colonization on microbial and chemical composition of the cheeses. Italian Journal of Food Safety, 1(7). https://doi.org/10.4081/ijfs.2010.7.45
Turck, D., Bohn, T., Castenmiller, J., de Henauw, S., Hirsch-Ernst, K. I., Maciuk, A., Mangelsdorf, I., McArdle, H. J., Naska, A., Pelaez, C., Pentieva, K., Siani, A., Thies, F., Tsabouri, S., Vinceti, M., Cubadda, F., Frenzel, T., Heinonen, M., Marchelli, R., ... Knutsen, H. K. (2021). Safety of frozen and dried formulations from whole yellow mealworm (Tenebrio molitor larva) as a novel food pursuant to Regulation (EU) 2015/2283. In EFSA Journal (Vol. 19, Issue 8). https://doi.org/10.2903/j.efsa.2021.6778

## Claims

1. A method to render cheese containing fly larvae and microbes safe for human consumption by killing all of said larvae and microbes, while at the same time not altering biogenic amines that contribute to the taste of said cheese.

2. The method of killing all of said larvae and microbes wherein said method consists of heating the said cheese to greater than 90°C.

3. The method of claim 1 wherein the said fly larvae are of the species Piophila casei.

4. The cheese in claim 1 wherein the said cheese is casu marzu.

5. The biogenic amine in claim 1 wherein the biogenic amine is putrescine.

6. The biogenic amine in claim 1 wherein the biogenic amine is cadaverine.
